Europäisches Patentamt

European Patent Office

Office européen des brevets

(19)

(11) Veröffentlichungsnummer: **0 191 944**
**B1**

(12) **EUROPÄISCHE PATENTSCHRIFT**

(45) Veröffentlichungstag der Patentschrift:
19.07.89

(51) Int. Cl.⁴: **G 02 C  5/22**

(21) Anmeldenummer: 85116334.5

(22) Anmeldetag: 20.12.85

(54) **Federscharnier für Brillen.**

(30) Priorität: 26.01.85 DE 3502604

(43) Veröffentlichungstag der Anmeldung:
27.08.86 Patentblatt 86/35

(45) Bekanntmachung des Hinweises auf die Patenterteilung: 19.07.89 Patentblatt 89/29

(84) Benannte Vertragsstaaten:
AT CH DE FR IT LI

(56) Entgegenhaltungen:
EP--A-- 0 091 573
EP--A-- 0 096 928
DE--A-- 3 115 816
FR--A-- 2 250 127
FR--A-- 2 366 592
FR--A-- 2 398 322
FR--A-- 2 424 558
FR--A-- 2 466 788
US--A-- 3 957 360

(73) Patentinhaber : OBE-Werk Ohnmacht & Baumgärtner GmbH & Co. KG
Turnstrasse 20
D-7536 Ispringen (DE)

(72) Erfinder : Drlik, Günther
Adolf-Sautter-Strasse 3
D-7530 Pforzheim 8 (DE)

(74) Vertreter : Hubbuch, Helmut, Dipl.-Ing et al
Patentanwälte Dr. Rudolf Bauer Dipl.-Ing. Helmut Hubbuch Dipl.-Phys. Ulrich Twelmeier Westliche Karl-Friedrich-Strasse 29-31
D-7530 Pforzheim (DE)

EP 0 191 944 B1

## Beschreibung

Die Erfindung bezieht sich auf ein Federscharnier für Brillen zum Überdrücken des Brillenbügels über die Anschlagstellung hinaus zur federnden Anlage am Kopf des Trägers.

Nach der DE-PS 21 15 596 sind solche Federscharniere bekannt, bestehend aus gelenkig miteinander verbundenem Bügel- und Mittelteilscharnier, bei welchem das Bügelscharnier ein Schieberteil aufweist, das mit einer Federaufnahme und -Führung ausgebildet und am Brillenbügelende gegen Federwirkung verschiebbar ist, wobei in einer korrespondierenden Aufnahme des Bügelende beidseits Führungsnuten vorgesehen sind und das Bügelscharnier mit Schieberteil als Schlitten im Bügelende bei eingelassener Rückholfeder geführt ist. Diese Schienenführung bringt zwar eine verkantungsfreie, sichere Führungsteile und baut niedrig, benötigt aber eine bestimmte Breitenerstreckung durch die seitliche Schienenführung, auch ist kein Ausgleich des wenn auch geringen Toleranzspiels gegeben.

Es ist nun Aufgabe des Federscharniers der Erfindung auch schmale Brillenbügel bei niedriger Bauweise vom Federscharnier zu erreichen und eine Queverspannung in der Führungstoleranz zu ermöglichen.

Zur Lösung dieser Aufgabe kennzeichnet sich das erfindungsgemäße Federscharnier gemäß dem Oberbegriff des Anspruchs dadurch, daß auch in der Federaufnahme des Schieberteils beidseits Führungsnuten vorgesehen sind, in welche als gemeinsame Verbindungsstücke für Bügelende und Schieberteil in den Federaufnahmen integrierte Doppel-T-Stücke eingreifen, wodurch sich Seitenwandstärken erübrigen, was zu schmälerer Bauweise führt.

Im einzelnen sind hierzu als gemeinsame Verbindungsstücke ein rückseitiges Doppel-T-Stück gleichzeitig als verschiebbarer Federanschlag und ein vorderseitiges Doppel-T-Stück gleichzeitig als fester Federanschlag in die Führungsnuten des Schieberteils und des Bügelendes eingesetzt.

Zur Erreichung einer spielfreien Führung vom Schieberteil des Bügelscharniers am Bügelende kann das rückseitige Doppel-T-Stück in der in einer Endrundung einlaufenden Nutführung unter Federwirkung mit dem Schieberteil des Bügelscharniers und das vorderseitige Doppel-T-Stück durch Verschraubung in der Nutführung des Bügelendes verspannt sein.

Weitere Einzelheiten des Federscharniers gemäß der Erfindung sind an Hand der Zeichnung an bevorzugten Ausführungsbeispielen dargestellt und nachfolgend beschrieben und zwar zeigen:

Figur 1 und 2 eine Explosionszeichnung einer ersten Ausführung mit Schnitt durch die Scharnierführung im Brillenbügel,

Figur 3 und 4 die Längsschnitte der ersten Scharnierausführung in Offen- und Überdruckstellung des Brillenbügels,

Figur 5 die Draufsicht auf die Verspannung des rückseitigen Verbindungsstücks,

Figur 6 den Längsschnitt durch eine weitere Scharnierausführung mit Schnappeffekt zwischen Ruhe- und Offenstellung und

Figur 7 die perspektivische Ansicht des vorderen Verbindungsstücks als Rollenträger zur Ausführung nach Figur 6 und

Figur 8 den Schnitt durch die Scharnierausführung für einen Kunststoff- oder Alu-Bügel.

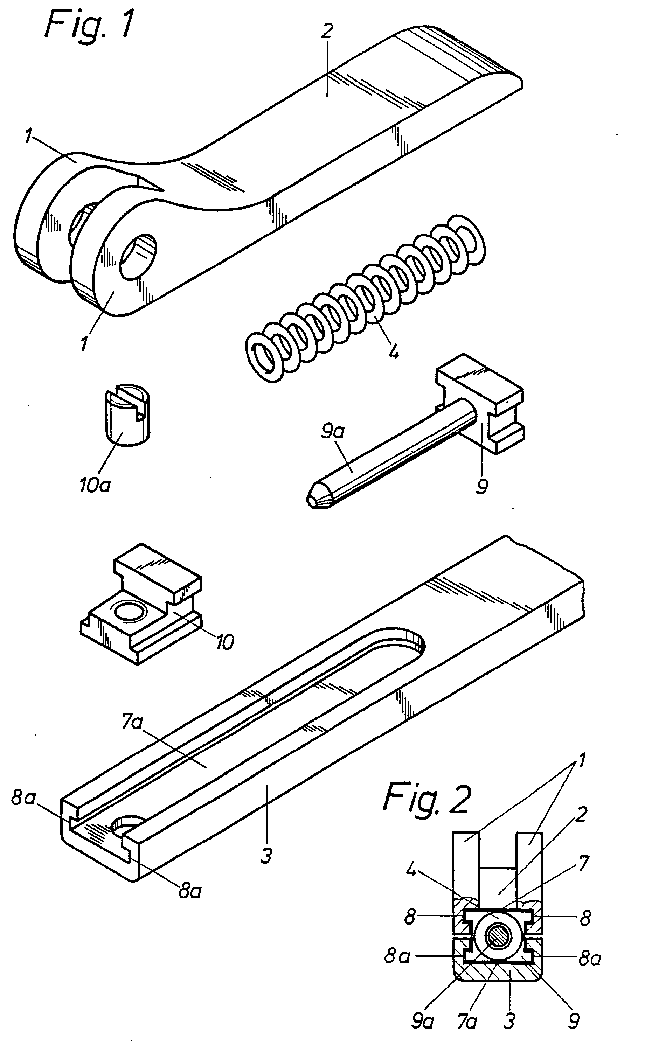

Beim ersten Ausführungsbeispiel nach Figur 1 bis 5 wird das Federscharnier gebildet aus dem Bügelscharnier mit Scharnieraugen 1 (Doppelaugen) und Schieberteil 2, welches mit dem Bügelende 3 unter Zwischenschaltung einer Feder 4 zusammenwirkt, und aus dem Mittelteilscharnier mit Scharnierauge 5 (Mittelauge), welches am Mittelteil 6 verankert ist.

Das Schieberteil 2 und Bügelende 3 weisen jeweils eine korrespondierende Federaufnahme und -Führung 7 und 7a auf mit beidseitigen Nutführungen 8 und 8a, in welchen hier ein rückseitiges Verbindungsstück als Doppel-T-Stück 9 und ein vorderseitiges Verbindungsstück als Doppel-T-Stück 10 eingebracht sind. Hierbei dient das rückseitige Doppel-T-Stück 9 als verschiebbarer Federanschlag für die aufzuschiebende Feder 4, wobei der Führungsbolzen 9a gleichzeitig die Federwegbegrenzung bildet. Das vorderseitige Doppel-T-Stück 10 ist als fester Federanschlag mittels Schraube 10a im Bügelende 3 lösbar festgelegt.

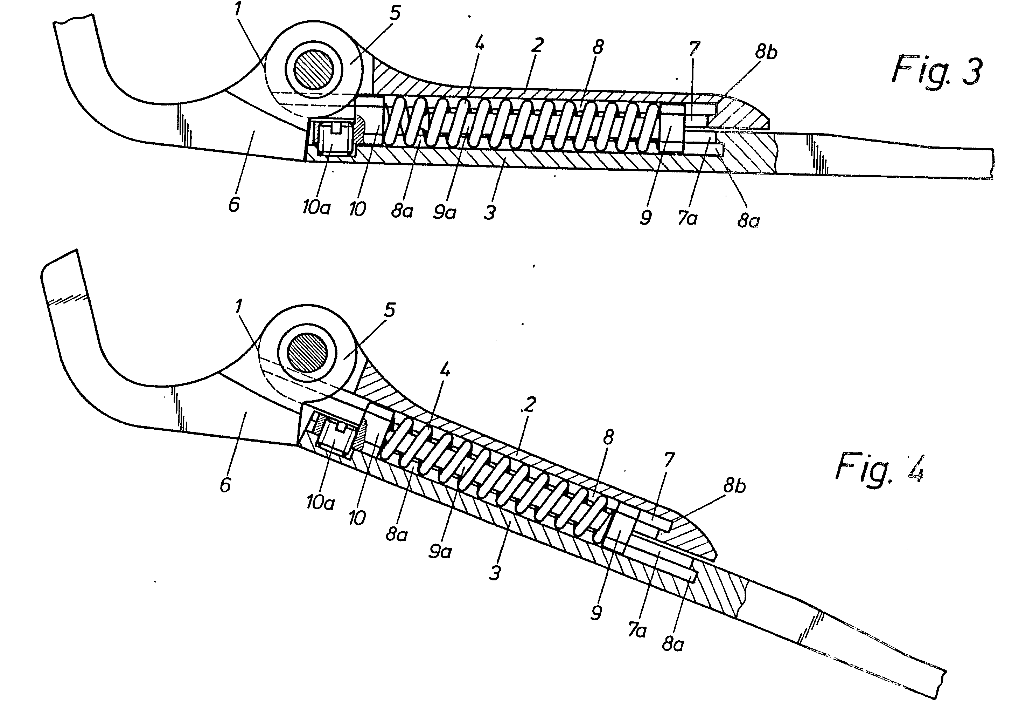

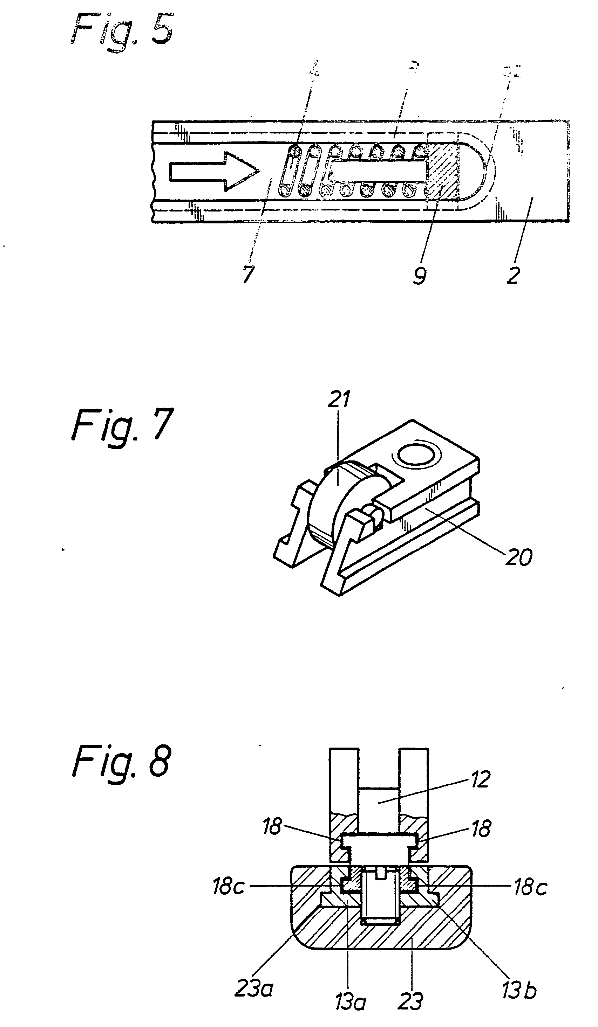

Das rückseitige Doppel-T-Stück 9 wird unter Federwirkung in der in einer Endrundung 8b einlaufenden Nutführung 8 des Schieberteils 2 einerseits verspannt (Figur 5), wofür die Nutführung 8a im Bügelende 3 hiergegen weiterreicht (Fig. 3). Das vorderseitige Doppel-T-Stück 10, welches durch Verschraubung 10a in der Nutführung 8a im Bügelende 3 festgelegt ist, bildet das anderseitige Gegenlager zur Queverspannung für die spielfreie Führung der beiden Teile — Schieberteil 2 und Bügelende 3 — zueinander. Hierbei zeigt die Fig. 4 die Überdruckstellung gegenüber der Normaloffenstellung eines Brillenbügels nach Figur 3, während die Figur 1 die Einzelteile in Explosionsdarstellung bringt und Figur 2 den Schnitt durch die Nutführung 8 und 8a zwischen Schieberteil 2 und Bügelende 3.

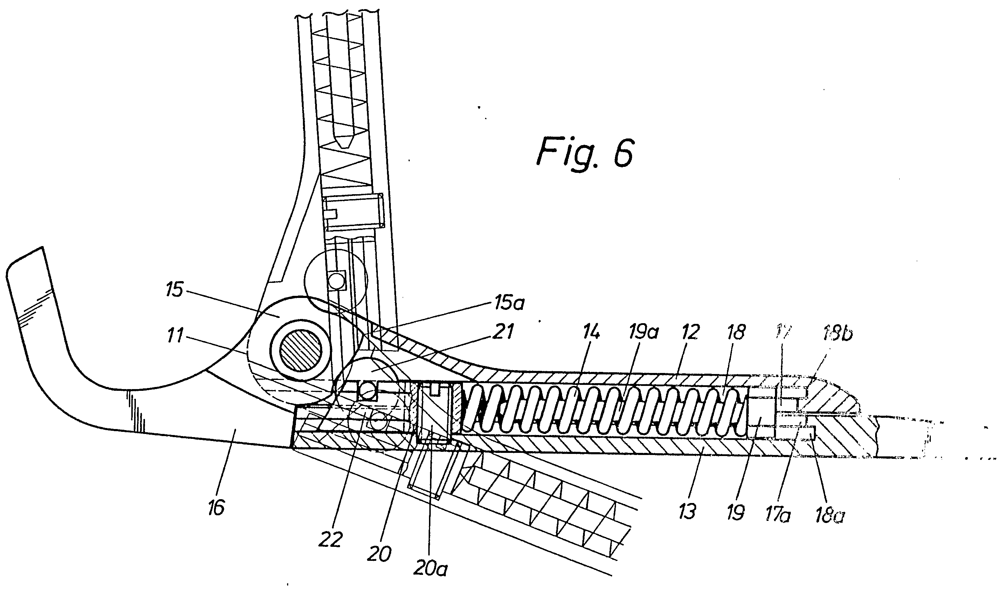

Beim zweiten Ausführungsbeispiel nach Figur 6 und 7 ist eine Ausbildung gezeigt mit Schnappeffekt zwischen Normaloffen- und Einschlagstellung der Brillenbügel. Hierbei wird das Federscharnier ebenfalls gebildet aus dem Bügelscharnier mit Scharnieraugen 11 (Doppelaugen) und Schieberteil 12, welches mit dem Bügelende 13 unter Zwischenschaltung einer Feder 14 zusammenwirkt und aus dem Mittelteilscharnier mit Scharnierauge 15 (Mittelauge), welches am Mittelteil 16 verankert ist. Bei dieser Ausführung weist das Mittelteil-Scharnierauge 15 einen Nocken 15a zur Erzeugung eines Schnappeffekts auf, wie dies später erläutert wird.

Auch hier weisen das Schieberteil 12 und Bügelende 13 jeweils eine korrespondierende Federaufnahme und -Führung 17 und 17a auf mit beidseitigen Nutführungen 18 und 18a, in welchen ein rückseitiges Verbindungsstück als Doppel-T-Stück 19 und ein vorderseitiges Verbindungsstück als Doppel-T-Stück 20 eingebracht ist. Das rückseitige Doppel-T-Stück 19 dient ebenfalls als verschiebbarer Federanschlag mit Führungsbolzen 19a für die aufzuschiebende Feder 14 und zur Federwegbegrenzung. Das vorderseitige Doppel-T-Stück 20 ist als fester Federanschlag mittels Schraube 20a im Bügelende 13 lösbar festgelegt und dient hier gleichzeitig durch Aufnahme einer Rolle 21 als Rollenträger (Fig. 7) zur Erzeugung eines Schnappeffekt in Verbindung mit dem Nocken 15a am Mitteilauge 15.

Im übrigen wird auch hier das rückseitige Doppel-T-Stück 19 unter Federwirkung in der in einer Endrundung 18b einlaufenden Nutführung 18 des Schieberteils 12 einerseits verspannt gegenüber dem vorderseitigen Doppel-T-Stück 20, welches durch Verschraubung 20a im Bügelende 13 festgelegt ist und das Gegenlager zur Querverspannung für die spielfreie Führung bildet. Hierbei ist in Fig. 6 die Normaloffenstellung gezeigt mit Andeutung sowohl der Überdruckstellung als auch der Einklappstellung eines Brillenbügels.

Zur Einbringung des als Gegenlager dienenden vorderseitigen Doppel-T-Stücks 20 gegen unter Spannung stehender Feder 14 ist, wie aus Figur 6 ersichtlich, ein Montagetunnel 22 unterhalb der Scharnieraugen zur Gegenhaltung beim Einbringen der Schraube 20a vorgesehen. Anstelle einer Verschraubung kann auch ein Sperrkörper, z. B. nach Patent 22 42 044 treten.

Schließlich ist in Figur 8 noch der Schnitt durch eine Scharnierführung für einen Kunststoff- oder Alu-Bügel dargestellt, während die bisherigen Ausführungsbeispiele sich auf Metallbügel bezogen mit im Bügelende unmittelbar eingeschnittenen Führungsnuten. Hierbei entspricht das Schieberteil 12 mit Nutführung 18 der vorhergehenden Ausführung, dagegen ist die Nutführung 18c hier nicht unmittelbar im Bügelende eingebracht, sondern in einer besonderen Bügeleinlage 13a, welche ihrerseits Seitenleisten 13b aufweist, mit welchen sie in Nutführungen 23a eines Kunststoff- oder Alu-Bügels 23 eingeführt ist. Hierdurch wird bei Kunststoffbügeln eine Metallführung erreicht und bei Alu-Bügeln eine Reibung zwischen Metall-Schieberteil und Alu-Bügelende vermieden.

## Patentansprüche

1. Federscharnier für Brillen zum Überdrücken des Brillenbügels (3 ; 13) über die Anschlagstellung hinaus zur federnden Anlage am Kopf des Trägers, bestehend aus gelenkig miteinander verbundenem Bügel- und Mittelteilscharnier (1, 2, 5 ; 11, 12, 15), bei welchem das Bügelscharnier (1, 2 ; 11, 12) ein Schieberteil (2 ; 12) aufweist, das mit einer Federaufnahme und -Führung (7, 17) ausgebildet und am Brillenbügelende (3 ; 13) gegen Federwirkung verschiebbar ist, wobei in einer korrespondierenden Aufnahme (7a ; 17a) des Bügelende (3 ; 13) beidseits Führungsnuten (8a ; 18a) vorgesehen sind, dadurch gekennzeichnet, daß auch in der Federaufnahme (7 ; 17) des Schieberteils (2 ; 12) beidseits Führungsnuten (8 ; 18) vorgesehen sind, in welche als gemeinsame Verbindungsstücke für Bügelende (3 ; 13) und Schieberteil (2 ; 12) in den Federaufnahmen (7, 7a ; 17, 17a) integrierte Doppel-T-Stücke (9, 10 ; 19, 20) eingreifen.

2. Federscharnier nach Anspruch 1, dadurch gekennzeichnet, daß als gemeinsame Verbindungsstücke ein rückseitiges Doppel-T-Stück (9 ; 19) gleichzeitig als verschiebbarer Federanschlag und ein vorderseitiges Doppel-T-Stück (10 ; 20) gleichzeitig als fester Federanschlag in die Führungsnuten (7, 7a ; 17, 17a) des Schieberteils (2 ; 12) und des Bügelendes (3 ; 13) eingesetzt sind.

3. Federscharnier nach Anspruch 2, dadurch gekennzeichnet, daß das rückseitige Doppel-T-Stück (9 ; 19) als verschiebbarer Federanschlag einen Führungsbolzen (9a, 19a) für die aufzuschiebende Schraubenfeder (4 ; 14) aufweist, welcher gleichzeitig der Federwegbegrenzung dient.

4. Federscharnier nach Anspruch 2 oder 3, dadurch gekennzeichnet, daß das vorderseitige Doppel-T-Stück (10 ; 20) als fester Federanschlag mittels Sperrkörper oder Schraube (10a ; 20a) im Bügelende (3 ; 13) lösbar festgelegt ist.

5. Federscharnier nach einem der Ansprüche 2 bis 4, dadurch gekennzeichnet, daß das rückseitige Doppel-T-Stück (9 ; 19) in der in einer Endrundung (8b, 18b) einlaufenden Nutführung (8 ; 18) unter Federwirkung (4, 14) mit dem Schieberteil (2 ; 12) des Bügelscharniers (Scharnierauge 1 ; 11) und das vorderseitige Doppel-T-Stück (10 ; 20) durch Verschraubung (10a ; 20a) in der Nutführung (8a ; 18a) des Bügelendes (3 ; 13) zur spielfreien Führung beider Teile miteinander verspannt ist.

6. Federscharnier nach Anspruch 5, dadurch gekennzeichnet, daß die Nutführung (8a) im Bügelende (3) gegenüber der Nutführung (8) im Schieberteil (2) in ihrer Endrundung weiter reicht zur sicheren Verspannung des rückseitigen Doppel-T-Stücks (9) im Schieberteil (2) (Fig. 5).

7. Federscharnier nach einem der vorhergehenden Ansprüche, dadurch gekennzeichnet, daß das vorderseitige Doppel-T-Stück (20) mit vorzugsweise verrundeter Oberkante in Zusammenwirkung mit einer Nockenausbildung (15a) am Mittelteilscharnier (15) einen Schnappeffekt zwischen Ruhe- und Offenstellung des Brillenbügels erzeugt.

8. Federscharnier nach Anspruch 7, dadurch gekennzeichnet, daß das vorderseitige Doppel-T-Stück (20) zur Aufnahme einer Rolle (21) — als Rollenträger — ausgebildet ist, welche Rolle (21) mit der Nockenausbildung (15a) des Mittelteilscharniers (15) einen Schnappeffekt bewirkt (Fig. 7).

9. Federscharnier nach einem der vorhergehenden Ansprüche, dadurch gekennzeichnet,

daß unterhalb des Scharnierauges (11) im Bügelende (13) ein Montagetunnel (20) zur Festlegung des vorderseitigen Doppel-T-Stücks (20) gegen Federwirkung (14) vorgesehen ist (Fig. 6).

10. Federscharnier nach einem der vorhergehenden Ansprüche, dadurch gekennzeichnet, daß die beidseitige Nutführung im Bügelende (23) unmittelbar oder als Bügeleinlage (13a) eingebracht ist, wobei die letztere (13a) vorzugsweise mittels Seitenleisten (13b) in Nutführungen (23a) des Kunststoff- oder Metallbügels, letzteres insbes. bei Alu-Bügel (23) eingebracht ist (Fig. 8).

## Claims

1. A spring hinge for eyeglasses for urging the bow (3 ; 13) of the eyeglasses beyond the stop position for a resilient engagement with the head of the wearer, consisting og a bow-side hinge member and a centre-part-side hinge member (1, 2, 5 ; 11, 12, 15), which are articulatedly interconnected, wherein the bow-side hinge member (1, 2 ; 11, 12), comprises a slider (2 ; 12), which is formed with a spring receptacle and spring guide (7, 17) and on the end portion (3 ; 13) of the eyeglass bow is displaceable against spring action, and the bow end portion (3 ; 13) has a mating receptacle (7a ; 17a) which is provided with guide grooves (8a ; 18a) on opposite sides, characterized in that guide grooves (8 ; 18) are provided on opposite sides also in the spring receptacle (7 ; 17) of the slider (2 ; 12) and receive integrated I-section members (9, 10 ; 19, 20), which constitute common connecting members for the bow end portion (3 ; 13) end the slider (2, 12).

2. A spring hinge according to claim 1, characterized in that a rear I-section member (9 ; 19) serving also as a displaceable spring abutment and a front I-section member (10 ; 20) serving also as a fixed spring abutment have been inserted as common connecting members into the guide grooves (7, 7a ; 17, 17a) of the slider (2 ; 12) and of the bow end portion (3 ; 13).

3. A spring hinge according to claim 2, characterized in that the rear I-section member (9 ; 19) comprises as a displaceable spring abutment a guide pin (9a, 19a) for the coil spring (4 ; 14) that is to be fitted and said guide pin serves also to limit the excursion of the spring.

4. A spring hinge according to claim 2 or 3, characterized in that the front I-section member (10, 20) which constitutes a fixed spring abutment is detachably fixed in the bow end portion (3 ; 13) by a locking member or screw (10a ; 20a).

5. A spring hinge according to any of claims 2 to 4, characterized in that the rear I-section member (9 ; 19) at its groove guide (8, 18), which has a curved end portion (8b ; 18b) is urged by a spring action (4 ; 14) against the slider (2 ; 12) of the bow-side hinge member (hinge eye 1 ; 11) and the front I-section member (10 ; 20) is urged into the groove guide (8a ; 18a) of the bow end portion (3 ; 13) by screw means (10a ; 20a) so that the two parts are guided without a backlash.

6. A spring hinge according to claim 5, characterized in that the groove guide (8a) in the bow end portion (3) has a curved end portion which extends beyond the groove guide (8) in the slider (2) so that the rear I-section member (9) is reliably constrained in the slider (2) (Figure 5).

7. A spring hinge according to any of the preceding claims, characterized in that the front I-section member (20) with its preferably rounded top edge cooperates with a cam (15a) on the centre-part-side hinge member (15) to produce a snap action between the position of rest and the open position of the eyeglass bow.

8. A spring hinge according to claim 7, characterized in that the front I-section member (20) is designed to receive a roller (21) — as a roll carrier — and said roller (21) cooperates with the cam (15a) of the centre-part-side hinge member (15) to produce a snap action (Figure 7).

9. A spring hinge according to any of the preceding claims, characterized in that an assembly tunnel (20) is formed in the bow end portion (13) below the hinge eye (11) and serves to hold the front I-section member (20) in position against spring action (14) (Figure 6).

10. A spring hinge according to any of the preceding claims characterized in that the groove guide provided on opposite sides is formed directly in the bow end portion (23) or is constituted by a bow insert (13a), which is preferably inserted by means of side ribs (13b) in groove guides (23a) of the plastics or metal bow, in the latter case particularly in an aluminium bow (23) (Figure 8).

## Revendications

1. Charnière à ressort pour lunettes pour repousser la branche de lunettes (3 ; 13) au-delà de la position de butée en vue d'une application élastique contre la tête du porteur, avec charnière de branche et charnière d'élément central (1, 2, 5 ; 11, 12, 15) articulées l'une sur l'autre, pour laquelle la charnière de branche (1, 2 ; 11, 12) comprend un élément coulissant (2 ; 12) lequel présente un logement et guidage de ressort (7 ; 17) et peut être déplacé à l'extrémité (3 ; 13) de la branche de lunettes contre l'action du ressort, des rainures de guidage (8a ; 18a) étant prévues des deux côtés dans un logement correspondant (7a ; 17a) de l'extrémité de branche (3 ; 13), caractérisée en ce que dans le logement de ressort (7 ; 17) de l'élément coulissant (2 ; 12) aussi, il est prévu, des deux côtés, des rainures de guidage (8 ; 18) dans lesquelles s'engagent, en tant que raccords communs pour l'extrémité de branche (3 ; 13) et l'élément coulissant (2 ; 12), des pièces en double T (9, 10 ; 19, 20) intégrées dans les logements de ressort (7, 7a ; 17, 17a).

2. Charnière à ressort selon la revendication 1, caractérisée en ce qu'une pièce postérieure en double T (9 ; 19) servant en même temps de butée de ressort mobile, et une pièce antérieure en double T (10 ; 20) servant en même temps de butée de ressort fixe sont placées, en tant que raccords communs, dans les rainures de guidage (7, 7a ; 17, 17a) de l'élément coulissant (2 ; 12) et de l'extrémité de branche (3 ; 13).

3. Charnière à ressort selon la revendication 2, caractérisée en ce que la pièce postérieure en double T (9 ; 19) formant butée de ressort mobile présente une broche-guide (9a ; 19a) pour le ressort cylindrique (4 ; 14) à enfiler laquelle sert en même temps à limiter la course élastique.

4. Charnière à ressort selon l'une des revendications 2 ou 3, caractérisée en ce que la pièce antérieure en double T (10 ; 20) formant butée de ressort fixe est immobilisée de manière amovible dans l'extrémité de branche (3 ; 13) au moyen d'un élément d'arrêt ou d'une vis (10a ; 20a).

5. Charnière à ressort selon l'une des revendications 2 à 4, caractérisée en ce que la pièce postérieure en double T (9 ; 19) est solidarisée, dans la rainure de guidage (8 ; 18) pénétrant dans un arrondi terminal (8b ; 18b), sous l'action du ressort (4 ; 14), avec l'élément coulissant (2 ; 12) de la charnière de branche (œil de charnière 1 ; 11) et que la pièce antérieure en double T (10 ; 20) est bloquée par vissage (10a ; 20a) dans la rainure de guidage (8a ; 18a) de l'extrémité de branche (3 ; 13) pour le guidage sans jeu des deux pièces.

6. Charnière à ressort selon la revendication 5, caractérisée en ce que la rainure de guidage (8a) dans l'extrémité de branche (3) s'étend plus loin que la rainure de guidage (8) dans l'élément coulissant (2), dans l'arrondi terminal de celui-ci, pour assurer une fixation fiable de la pièce postérieure en double T (9) dans l'élément coulissant (2) (fig. 5).

7. Charnière à ressort selon l'une des revendications précédentes, caractérisée en ce que la pièce antérieure en double T (20) dont l'arête supérieure est, de préférence, arrondie produit, en coopération avec une conformation en came (15a) sur la charnière d'élément central (15), un effet d'encliquetage entre les positions de repos et d'ouverture de la branche de lunettes.

8. Charnière à ressort selon la revendication 7, caractérisée en ce que la pièce antérieure en double T (20) est conçue pour recevoir un galet (21) — comme porte-galet — lequel galet (21) produit, conjointement avec la conformation en came (15a) de la charnière d'élément central (15), un effet d'encliquetage (fig. 7).

9. Charnière à ressort selon l'une des revendications précédentes, caractérisée en ce qu'elle comprend, au-dessous de l'œil de charnière (11) dans l'extrémité de branche (13), un tunnel de montage (22) pour bloquer la pièce antérieure en double T (20) contre l'action du ressort (14) (fig. 6).

10. Charnière à ressort selon l'une des revendications précédentes, caractérisée en ce que les rainures de guidage bilatérales dans l'extrémité de branche (23) sont réalisées directement ou sous la forme d'une garniture de branche (13a), cette dernière (13a) étant introduite, de préférence, au moyen de baguettes latérales (13b) dans des rainures de guidage (23a) de la branche en matière plastique ou en métal, en particulier pour des branches en aluminium (23) (fig. 8).

Fig. 1

Fig. 2

Fig. 3

Fig. 4

EP 0 191 944 B1

Fig. 5

Fig. 7

Fig. 8

Fig. 6

EP 0 191 944 B1